# FASCICULE DE BREVET EUROPEEN

(11) **EP 1 635 507 B1**
(45) Date de publication et mention de la délivrance du brevet: **05.12.2012**
(21) Numéro de dépôt: 05300379.4
(22) Date de dépôt: 17.05.2005
(51) Int. Cl.: H04L 12/24

(54) **Dispositif de diagnostic à modèles de diagnostic adaptatifs, pour un réseau de communications**
Diagnostikvorrichtung mit adaptiven Diagnostikmodellen für ein Kommunikationsnetzwerk
Diagnosis device with adaptive diagnosis models for a communication network

(30) Priorité: 08.09.2004 FR 0451983
(43) Date de publication de la demande: 15.03.2006
(73) Titulaire: Alcatel Lucent, 75007 Paris (FR)
(72) Inventeur: SAIDI, Mohamed Adel, f.92160, ANTONY (FR); MARTINOT, Olivier, f-91210, DRAVEIL (FR); MARILLY, Emmanuel, f-91240, SAINT-MICHEL-SUR-ORGE (FR); SQUEDIN, Sylvain, f-91620, NOZAY (FR)
(74) Mandataire: Sciaux, Edmond

(56) Documents cités:
- WO-A1-97/35406
- US-A- 6 076 083
- US-A1- 2001 015 984

## Description

L'invention concerne le domaine des réseaux de communications gérés, et plus particulièrement les dispositifs de diagnostic chargés de déterminer la cause de problème(s) survenant au sein de tels réseaux.

De nombreuses causes peuvent être à l'origine de problèmes survenant dans des réseaux de communications gérés. Parmi les principales causes, on peut par exemple citer les coupures de courant, les ruptures de liaison(s), les pannes ou dysfonctionnements d'équipement(s) de réseau (ou d'élément(s) le(s) constituant), et l'intégration d'une nouvelle ou ancienne version d'équipement de réseau (ou d'un élément le constituant) pas entièrement compatible avec le reste du réseau.

On entend ici par « équipement de réseau » une combinaison de matériel (ou « hardware ») et de logiciel (ou « software »).

Un certain nombre de dispositifs (ou outils) de diagnostic ont été proposés afin de permettre la détermination de la cause de problème(s). Certains de ces dispositifs utilisent des techniques reposant sur une programmation en langage objet et/ou des langages reposant sur des règles, éventuellement gérées par un moteur de règles. C'est notamment le cas du dispositif ECXpert (pour « Event Correlation eXpert »), des dispositifs de la société ILOG qui utilisent un moteur de règles programmable en vue d'un diagnostic, des dispositifs « Network Node Manager » ®, version 6.4, et « Network Node Manager Extended Topology » ®, version 2.0, de la société Hewlett Packard, du dispositif « Fault Detective for Data Communications » (FDDC)® de la société Agilent, et du dispositif TAC® de la société CISCO.

La société ALCATEL propose également un dispositif de diagnostic reposant sur la théorie probabiliste Bayesienne et permettant de définir des règles pour affiner des hypothèses à partir de notions d'évidence additionnelle et d'informations d'arrière plan, lesquelles aboutissent à des nombres représentant chacun la probabilité qu'une hypothèse soit vraie et permettent la constitution de réseaux (ou diagrammes) bayesiens définissant des opérations de test associées à des poids statistiques ou probabilistes.

L'inconvénient principal de ces dispositifs de diagnostic réside dans le fait qu'ils utilisent des modèles de diagnostic statiques, c'est-à-dire dont les caractéristiques sont figées lors de leur conception, et donc ne peuvent pas être adaptés (ou dans le meilleur des cas seulement très partiellement) aux évolutions des ressources de la plupart des réseaux, tant sur le plan des équipements (ou de leurs versions) que sur le plan des logiciels (ou de leurs versions), ou à l'évolution du trafic dans le réseau. Cela résulte du fait que les modèles de diagnostic sont construits à partir d'une base de connaissances reposant sur l'expertise, laquelle est rarement adaptée à tous les équipements et logiciels spécifiques et/ou à toutes les combinaisons d'équipements et/ou de logiciels, et de surcroît n'est au mieux représentative que de ce qui est connu à l'instant de sa conception.

Le brevet US 6,076,083 propose une solution pour adapter les modèles de diagnostic, mais cette adaptation n'est toutefois réalisée qu'en fonction de l'expérience acquise par l'utilisation de ces modèles. Cette solution ne permet donc pas de prendre en compte l'évolution du réseau de communication géré, et elle s'avère donc insuffisante.

Certes, il est toujours possible de concevoir de nouveaux modèles de diagnostic adaptés à chaque évolution de réseau, mais cela est particulièrement onéreux et nécessite un certain temps de conception pendant lequel les nouvelles causes de problèmes survenant au sein d'un réseau ne peuvent être diagnostiquées correctement.

Aucun dispositif de diagnostic connu n'apportant une entière satisfaction, l'invention a donc pour but d'améliorer la situation.

Elle propose à cet effet un dispositif de diagnostic, pour un réseau de communications comportant des équipements de réseau couplés à un système de gestion (de réseau ou de service), comprenant des moyens de diagnostic chargés de déterminer la cause de problème(s) survenant au sein du réseau au moyen d'au moins un modèle de diagnostic.

Ce dispositif de diagnostic se caractérise par le fait qu'il comprend en outre des moyens de traitement, par exemple couplés au système de gestion, et chargés d'adapter les modèles de diagnostic en fonction de données représentatives de la constitution du réseau, fournies par le système de gestion.

Le dispositif de diagnostic peut comporter des caractéristiques complémentaires qui peuvent être prises séparément ou en combinaison, et notamment :
- lorsque les données reçues sont représentatives de modification(s) d'équipement de réseau, les moyens de traitement peuvent comporter, d'une part, des moyens chargés d'analyser les données reçues afin de déterminer des actions à entreprendre pour adapter le modèle de diagnostic compte tenu de(s) modification(s) d'équipement de réseau qu'elles représentent, et de générer des ordres représentatifs de ces actions, et d'autre part, des moyens chargés d'adapter un modèle de diagnostic en fonction d'ordre(s) reçu(s) des moyens d'analyse,
- les moyens de traitement peuvent comprendre une première mémoire (par exemple agencée sous la forme d'une base de données) couplée aux moyens d'analyse et chargée de stocker au moins un modèle de diagnostic de référence. Dans ce cas, les moyens d'analyse sont agencés pour déterminer chaque action d'adaptation à entreprendre par confrontation des données reçues à l'un au moins des modèles de diagnostic de référence stockés dans la première mémoire,
- les moyens d'analyse peuvent être chargés de déterminer des actions d'adaptation représentatives d'un nouveau modèle à construire, d'une modification à apporter à un modèle de diagnostic existant, ou d'une reconfiguration d'un modèle de diagnostic existant,
- une seconde mémoire (par exemple agencée sous la forme d'une base de données) peut être couplée aux moyens de traitement et aux moyens de diagnostic et chargée de stocker chaque modèle de diagnostic transmis par les moyens de traitement,
- les moyens d'adaptation peuvent être chargés, chaque fois qu'ils reçoivent un ordre requérant la génération d'un nouveau modèle de diagnostic (en raison de modifications spécifiques d'équipements de réseau), d'extraire de la première mémoire un modèle de diagnostic de référence adapté à la constitution du réseau compte tenu des modifications spécifiques, de manière à générer un nouveau modèle de diagnostic, puis à le stocker dans la seconde mémoire,
- les moyens d'adaptation peuvent être chargés, chaque fois qu'ils reçoivent un ordre requérant la modification d'un modèle de diagnostic existant (stocké dans la seconde mémoire), en raison de modifications spécifiques d'équipements de réseau, d'extraire de la seconde mémoire ce modèle de diagnostic existant afin de le modifier en fonction des modifications spécifiques, puis de le stocker, une fois modifié, dans la seconde mémoire,
- les moyens d'adaptation peuvent être chargés, chaque fois qu'ils reçoivent un ordre requérant la reconfiguration d'un modèle de diagnostic existant (stocké dans la seconde mémoire), en raison de modifications spécifiques d'équipements de réseau, d'extraire de la seconde mémoire ce modèle de diagnostic existant afin de le reconfigurer en fonction de ces modifications spécifiques, puis de le stocker, une fois reconfiguré, dans la seconde mémoire,
- les moyens de diagnostic peuvent être chargés, chaque fois qu'ils reçoivent une requête demandant un diagnostic choisi, provenant par exemple du système de gestion, d'extraire de la seconde mémoire ce diagnostic choisi, puis d'exécuter le modèle de diagnostic extrait de manière à délivrer un diagnostic sur une sortie,
- les données peuvent être transmises par le système de gestion sous la forme de notifications,
- certains au moins des modèles de diagnostic de référence peuvent être agencés sous la forme d'au moins un réseau bayesien,
- certains au moins des modèles de diagnostic peuvent être agencés sous la forme d'au moins un réseau bayesien.

L'invention concerne également un système de gestion (de réseau ou de service), pour un réseau de communications géré, comprenant au moins un dispositif de diagnostic du type de celui présenté ci-avant.

D'autres caractéristiques et avantages de l'invention apparaîtront à l'examen de la description détaillée ci-après, et des dessins annexés, sur lesquels :
- la figure 1 illustre de façon schématique un exemple de réalisation d'un dispositif de diagnostic selon l'invention, couplé à un système de gestion de réseau,
- les figures 2A à 2C illustrent respectivement, de façon schématique, un premier exemple de réseau Bayesien adapté à la détermination de la cause d'une perte de paquets dans un routeur IP, un deuxième exemple de réseau Bayesien résultant d'une adaptation du premier exemple de la figure 2A, et un troisième exemple de réseau Bayesien résultant d'une adaptation du deuxième exemple de la figure 2B, et
- la figure 3 illustre de façon schématique un exemple de réalisation d'un système de gestion de réseau comprenant un dispositif de diagnostic selon l'invention.

Les dessins annexés pourront non seulement servir à compléter l'invention, mais aussi contribuer à sa définition, le cas échéant.

L'invention a pour objet de permettre la détermination de la cause d'un problème, survenu au sein d'un réseau de communications géré, au moyen d'un dispositif de diagnostic comportant des modèles de diagnostic adaptatifs.

Tout type de réseau géré comportant des équipements de réseau, et notamment les réseaux à protocole Internet (ou IP), est concerné par l'invention.

On entend ici par « équipement de réseau » une combinaison de matériel (ou hardware) et de logiciel (ou software). Il peut par exemple s'agir de routeurs de coeur (ou « core routers ») et de routeurs périphériques (ou « edge routers »).

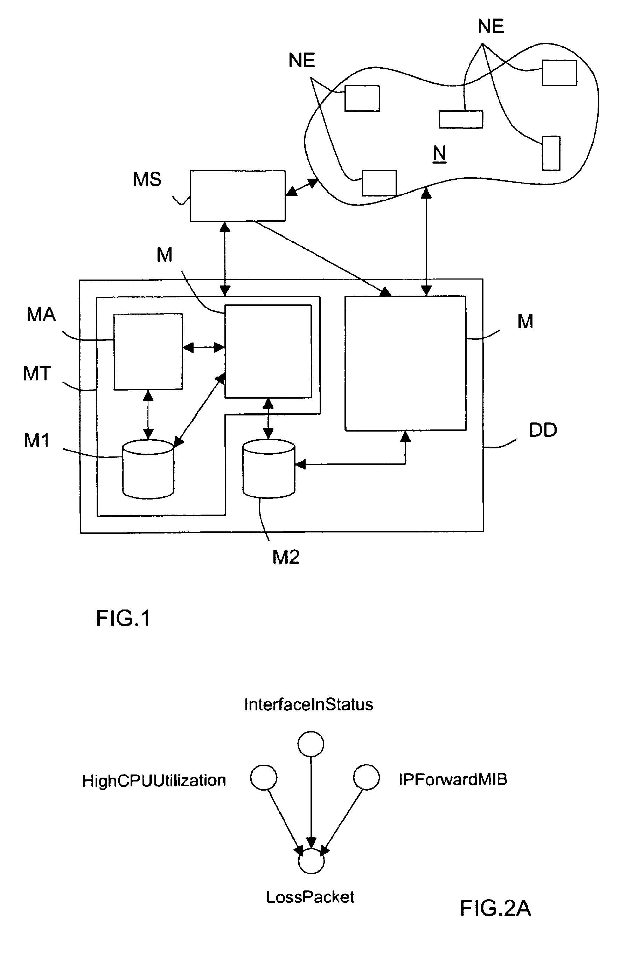

On se réfère tout d'abord à la figure 1 pour décrire un dispositif de diagnostic DD selon l'invention.

Dans l'exemple de réalisation illustré, le dispositif de diagnostic DD est couplé à un système de gestion MS d'un réseau de communications géré N. Il peut à cet effet se présenter sous la forme d'une carte ou d'un boîtier dédié(e) destiné(e) à être raccordé(e) au système de gestion MS, éventuellement via une interface de liaison.

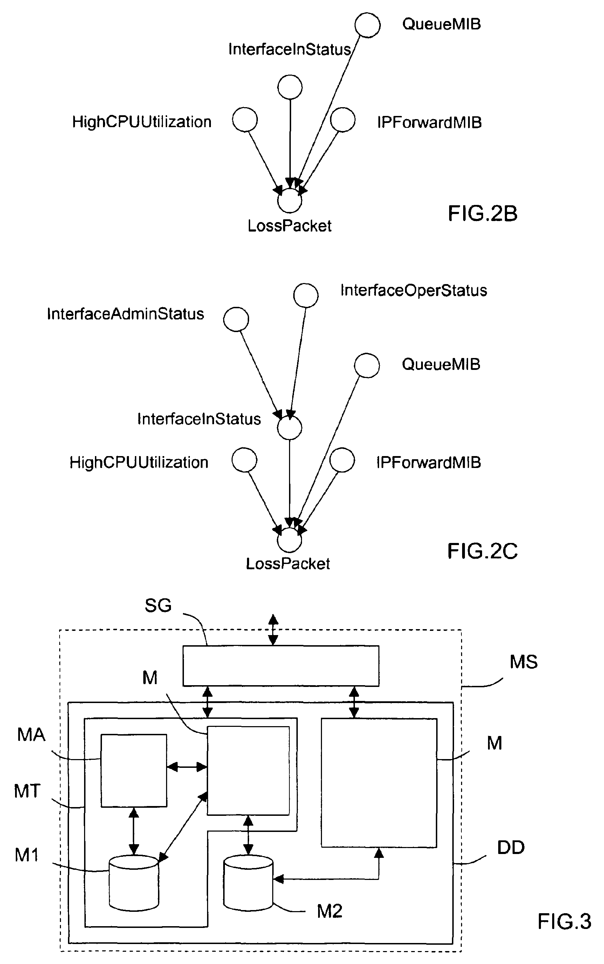

Mais, dans une variante illustrée sur la figure 3, le dispositif de diagnostic DD peut faire partie du système de gestion MS. Dans ce cas, le module de traitement MT du dispositif de diagnostic DD est couplé à un serveur de gestion SG du système de gestion MS.

Le système de gestion MS auquel est couplé le dispositif de diagnostic DD peut être un système de gestion de réseau ou NMS (pour « Network Management System ») ou bien un système de gestion de service du réseau N (lorsque l'on veut effectuer du diagnostic de service). Dans ce qui suit, on considère, à titre d'exemple non limitatif, que le système de gestion MS auquel est couplé le dispositif de diagnostic DD est un système de gestion de réseau (NMS).

Par ailleurs, le diagnostic peut aussi bien concerner le niveau réseau (équipements de réseau et configuration), que le niveau de gestion et de service (équipements de réseau, configuration, qualité de service (QoS), et accord de niveau de service (ou SLA pour « Service Level Agreement »).

Le dispositif de diagnostic DD comprend tout d'abord un module de diagnostic MD chargé de déterminer des causes de problèmes au moyen d'au moins un modèle de diagnostic.

Le module de diagnostic MD est chargé, chaque fois qu'on lui demande d'effectuer un diagnostic désigné dans une requête, d'activer (ou d'utiliser ou encore d'exécuter) le modèle de diagnostic qui correspond à ce diagnostic désigné afin de délivrer sur une sortie un diagnostic, c'est-à-dire au moins la (ou les) cause(s) d'un problème survenu au sein du réseau N.

Les modèles de diagnostic sont par exemple stockés dans une mémoire M2 du dispositif de diagnostic DD, par exemple agencée sous la forme d'une base de données et à laquelle peut accéder le module de diagnostic MD afin de sélectionner l'un d'entre eux consécutivement à la réception d'une requête de diagnostic.

L'envoi d'une requête de diagnostic au dispositif de diagnostic DD est généralement demandé par un opérateur de réseau consécutivement à la réception par le système de gestion de réseau MS d'une ou plusieurs notifications provenant des équipements de réseau NE.

La requête de diagnostic peut être soit générée par le système de gestion MS, soit transmise directement au dispositif de diagnostic DD sans passer par le système de gestion MS.

Ces notifications sont par exemple des alarmes que les équipements de réseau NE transmettent automatiquement au système de gestion de réseau MS lorsqu'ils détectent un problème (panne ou dysfonctionnement) en leur sein (c'est-à-dire au niveau de l'un de leurs éléments, par exemple une interface d'entrée ou de sortie) ou bien sur l'une de leurs liaisons.

Ces notifications ne contenant pas toujours suffisamment d'informations, des informations complémentaires peuvent être demandées aux équipements de réseau concernés par le système de gestion de réseau MS, généralement à la requête de l'opérateur du réseau. Ces informations complémentaires peuvent être par exemple des informations de gestion et/ou de fonctionnement de certains équipements de réseau NE, lesquelles sont généralement stockées dans leur base d'information de gestion ou MIB (pour « Management Information Base »).

Ces informations peuvent être également des mesures relatives à des paramètres de réseau, comme par exemple la bande passante utilisée sur certaines liaisons ou communications (analyse de trafic) ou les taux de perte de paquets sur certaines liaisons ou communications, lesquelles permettent notamment aux opérateurs de réseau de contrôler et gérer la qualité de service (ou QoS) associée à chaque client utilisateur ou service et définie par un accord de niveau de service (ou SLA pour « Service Level Agreement »).

L'invention concerne tout type de modèle de diagnostic, quels que soient les équipements de réseau NE concernés (qu'il s'agisse de pures composants (hardwares), de pures logiciels (softwares), ou de combinaisons de ceux-ci).

Le module de diagnostic MD est agencé en fonction du (ou des) modèle(s) de diagnostic qu'il utilise. Il est par conséquent conçu de manière à dérouler le scénario d'un modèle de diagnostic de référence, et utilise par exemple une base de données, des outils SNMPs, et analogue, et délivre sur une sortie des résultats constituants des diagnostics.

Le dispositif de diagnostic DD, selon l'invention, comporte également un module de traitement MT, ici couplé au système de gestion de réseau MS, et chargé d'adapter les modèles de diagnostic, qui sont par exemple stockés dans la mémoire M2, en fonction de données représentatives de la constitution du réseau N, fournies par le système de gestion de réseau MS.

Afin de procéder aux adaptations de modèle(s) de diagnostic, le module de traitement MT comporte par exemple, comme illustré sur la figure 1, un module d'analyse MA et un module d'adaptation MC couplés l'un à l'autre.

Le module d'analyse MA est plus précisément chargé d'analyser les données qui proviennent du système de gestion de réseau MS afin de déterminer les actions qui doivent être entreprises pour adapter le (ou l'un des) modèle(s) de diagnostic, stocké(s) dans la mémoire M2, ou générer un nouveau modèle de diagnostic.

Chaque action est déterminée en fonction des informations qui sont contenues dans les données reçues ainsi que dans d'éventuelles données complémentaires requises.

Par exemple, les données sont transmises par le système de gestion MS au module de traitement MT sous la forme de notifications de modification(s) d'équipement(s) de réseau NE (matériel et/ou logiciel).

Cette transmission peut se faire de façon automatique, soit périodiquement, soit chaque fois que le système de gestion MS reçoit des informations représentatives de modification(s) survenue(s) au sein du réseau N. En variante, on peut envisager que le module d'analyse MA soit configuré de manière à observer au sein du système de gestion MS les données représentatives de modification(s) survenue(s) au sein du réseau N. On peut également envisager que le module d'analyse MA soit configuré de manière à demander au système de gestion MS, par exemple périodiquement, qu'il lui transmette les données représentatives de modification(s) survenue(s) au sein du réseau N depuis la demande précédente.

Au moins trois types d'action peuvent être envisagés. Un premier type concerne les actions de génération d'un nouveau modèle de diagnostic à construire. Un deuxième type concerne les modifications à apporter à un modèle de diagnostic existant. Un troisième type concerne les reconfigurations d'un modèle de diagnostic existant.

Si les données reçues du système de gestion MS ne sont pas suffisantes à la détermination d'une action à entreprendre, le module d'analyse MA peut éventuellement requérir des informations complémentaires (données complémentaires) auprès du système de gestion MS.

Le module d'analyse MA est par ailleurs chargé de générer des ordres représentatifs des actions qu'il a déterminées consécutivement à la réception de données et destinés au module d'adaptation MC.

Un ordre définit une ou plusieurs actions à entreprendre et comprend les informations représentatives de la (ou des) modification(s) signalée(s) par le système de gestion MS.

Afin de déterminer chaque action à entreprendre, le module d'analyse MA peut par exemple confronter les données qu'il reçoit à un ou plusieurs modèles de diagnostic de référence (ou de base) qui sont stockés dans une mémoire M1 du module de traitement MT. Cette mémoire M1 est par exemple agencée sous la forme d'une base de données.

Les modèles de diagnostic de référence sont éventuellement de types différents. Ils peuvent notamment se présenter sous la forme de règles et/ou de modèles ou encore d'un réseau (ou diagramme causal) Bayesien. Toute technique de génération de modèle de diagnostic peut être envisagée, et notamment celle appelée CodeBook, ou la technique des réseaux de neurones, ou encore la technique des réseaux de Pétri.

Il est rappelé qu'un réseau Bayesien est un arbre de causalité constitué de branches associées respectivement à des probabilités complémentaires et comportant des noeuds désignant des tests de base (ou élémentaires) à effectuer et desquels partent éventuellement une ou plusieurs sous-branche(s), également associée(s) à une (des) probabilité(s) et comportant des noeuds désignant d'autres tests de base (ou élémentaires) à effectuer et desquels partent éventuellement une ou plusieurs sous-branche(s).

En d'autres termes, un réseau Bayesien est un scénario permettant de trouver la cause originelle (ou « root cause ») d'un problème spécifique, comme par exemple la perte de paquets dans un réseau lP VPN, et consistant à exécuter différents tests suivant des probabilités de cause, de manière à renvoyer la cause du problème et éventuellement des informations complémentaires (comme par exemple un nombre de paquets perdus) si celles-ci peuvent être déterminées.

Des informations complémentaires sur les réseaux Bayesiens et leur utilisation dans les dispositifs de diagnostic peuvent être trouvées dans le document de F. Jensen « An introduction to Bayesian Networks », UCL Press., 1996 (épuisé et réédité en 2001).

Chaque modèle de diagnostic de référence est adapté à la détermination d'au moins une cause d'un problème répertorié. Par exemple, un modèle de diagnostic de référence peut être dédié à la détermination de la perte de paquets dans un routeur lP.

Chaque modèle de diagnostic de référence peut comporter des tests, des demandes de mesures actives ou passives, des demandes de vérification de configuration, des demandes de vérification de consistance de configuration d'un service au travers du réseau, ou des demandes de lecture de paramètres stockés dans des bases d'informations de gestion (MIBs) ou disponibles dans certains équipements de réseau tels que des routeurs, et spécifiques à un équipement.

Les modèles de diagnostic de référence peuvent être élaborés par tout moyen, et notamment à partir (d'une base) de connaissances reposant sur l'expertise. Ces connaissances sont des données (ou informations) provenant d'une ou plusieurs sources, comme par exemple la conception des équipements (spécifications, configurations, validation, et analogues, et problèmes et/ou faiblesses rencontrés), la fabrication des équipements (composants utilisés, technologies utilisées, et analogues, et problèmes et/ou faiblesses rencontrés), les tests d'équipements en laboratoire (pannes critiques, fiabilité, défauts (ou « bugs »), compatibilité, durées de vie, et analogues), et l'utilisation en conditions réelles (informations provenant notamment des clients-utilisateurs, des services de maintenance et des rapports de panne, comme par exemple les informations statistiques relatives à la fiabilité et aux pannes des équipements et des composants dans le temps, pannes les plus fréquentes des équipements en fonction d'une utilisation spécifique ou d'une fabrication spécifique, compatibilités entre équipements, durée de vie, et analogues).

Un exemple détaillé d'obtention d'informations destinées à l'élaboration de tests de diagnostic relatif à la qualité de service (QoS) au sein d'un réseau IP VPN est notamment décrit dans le document de Gérard Delègue et al, « IP VPN Network Diagnosis :Technologies and Perspectives », 3rd International Conference on Networking, Mars 2002.

Le module d'adaptation MC est chargé d'adapter un modèle de diagnostic existant ou de créer un nouveau modèle de diagnostic en fonction des ordres reçus du module d'analyse MA, lesquels sont représentatifs d'une ou plusieurs actions à entreprendre (génération, modification ou reconfiguration).

Chaque fois que le module d'adaptation MC reçoit un ordre requérant la génération d'un nouveau modèle de diagnostic, accompagné des informations représentatives de la (ou des) modification(s) signalée(s) par le système de gestion MS, il extrait de la mémoire M1 un ou plusieurs modèles de diagnostic de référence adapté(s) à la constitution du réseau N, définie par les informations d'accompagnement. Puis, il génère un nouveau modèle de diagnostic, par exemple en combinant les modèles de diagnostic de référence extraits, éventuellement après avoir adapté (modifié et/ou configuré) l'un au moins d'entre eux. Il stocke ensuite ce nouveau modèle de diagnostic dans la mémoire M2 afin qu'il puisse être utilisé par le module de diagnostic MD sur requête.

Par ailleurs, chaque fois que le module d'adaptation MC reçoit un ordre requérant la modification d'un modèle de diagnostic existant, stocké dans la mémoire M2, accompagné des informations représentatives de la (ou des) modification(s) signalée(s) par le système de gestion MS, il extrait de la mémoire M1 ce modèle de diagnostic existant. Puis, il le modifie en fonction des modifications du réseau N signalées. Ces modifications peuvent éventuellement nécessiter l'extraction d'au moins un modèle de diagnostic de référence de la mémoire M1, en vue de l'intégrer dans le, ou de l'associer au, modèle de diagnostic existant, après une éventuelle adaptation (modification et/ou configuration). Le module d'adaptation MC stocke ensuite le modèle de diagnostic modifié dans la mémoire M2.

Par exemple, lorsque le modèle de diagnostic est agencé sous la forme d'au moins un réseau Bayesien, sa modification peut consister à ajouter au réseau Bayesien et/ou à supprimer de celui-ci une ou plusieurs branches et/ou sous-branches et/ou un ou plusieurs noeuds associés chacun à au moins un test de base et à une probabilité choisie. Par exemple, si la modification du réseau N porte sur le remplacement dans un équipement de réseau NE d'une carte de chassis d'un mono-processeur par une carte de chassis d'un multi-processeur, on remplace la branche utilisée pour tester la CPU par une branche multiple.

On a représenté sur les figures 2B et 2C, deux exemples de modifications successives apportées à un modèle de diagnostic agencé sous la forme d'un réseau Bayesiens (illustré sur la figure 2A).

Plus précisément, dans l'exemple illustré sur la figure 2A, le réseau Bayesien est un scénario destiné à déterminer la cause d'une perte de paquets (« LossPacket ») au sein d'un routeur IP d'un réseau IP VPN (« Internet Protocol Virtual Private Network » - réseau privé virtuel à protocole internet).

Dans ce réseau Bayesien :
- « InterfacelnStatus » est une variable modélisant le statut des interfaces d'entrée,
- « HighCPUUtilization » est une variable indiquant si la capacité de traitement (ou CPU) d'un routeur est surchargée ou non, et
- « IPForwardMIB » est une variable de test ayant pour objet de déterminer si un LSP est établi ou non.

« LossPacket » teste d'abord interfacelnStatus (qui est généralement la cause la plus probable). Puis, si le statut d'interfacelnStatus est « OK », il teste HighCPUUtilization (qui est généralement la deuxième cause la plus probable). Si le statut de HighCPUUtilization est « NOK » (ou non OK), LossPacket renvoie HighCPUUtilization NOK, la cause du problème (par exemple « la capacité d'un routeur est surchargée ») et le nombre de paquets perdus si celui-ci peut être déterminé. Si le statut de HighCPUUtilization est OK, LossPacket teste IPForwardMIB. Si le statut de IPForwardMIB est NOK, LossPacket renvoie IPForwardMIB NOK, la cause du problème (par exemple « un LSP n'est pas établi ») et le nombre de paquets perdus si celui-ci peut être déterminé.

Si une nouvelle version d'un logiciel a été implantée dans le réseau, un noeud supplémentaire doit alors être ajouté au réseau Bayesien de la figure 2A. Pour prendre en compte cette modification de la constitution du réseau, le module d'adaptation MC ajoute une branche comportant le noeud « QueueMib » au réseau Bayesien de la figure 2A, ce qui donne le réseau Bayesien modifié, illustré sur la figure 2B. « QueueMIB » est une variable vérifiant si les modèles de politique (« policy-map ») sont définis dans une interface d'entrée et une interface de sortie.

Ensuite, si une nouvelle interface est implantée dans le réseau, une portion de réseau doit être ajoutée au réseau Bayesien de la figure 2B. Pour prendre en compte cette modification de la constitution du réseau, le module d'adaptation MC ajoute deux branches comportant respectivement les noeuds « InterfaceOperStatus » et « InterfaceAdminStatus » au niveau du noeud InterfacelnStatus du réseau Bayesien de la figure 2B, ce qui donne le réseau Bayesien modifié, illustré sur la figure 2C.

« InterfaceOperStatus » est une variable de la base d'informations de gestion (MIB) qui indique l'état opérationnel courant d'une interface.

« InterfaceAdminStatus » est une autre variable de la base d'informations de gestion (MIB) qui indique l'état désiré d'une interface.

Lorsque le modèle est réalisé au moyen de la technique appelée « diagramme de séquences élémentaires » (ou « Elementary Sequence Diagram »), la modification consiste par exemple à effectuer des mises à jour d'un scénario séquentiel de référence par ajout ou suppression de tests simples aux séquences existantes.

Chaque fois que le module d'adaptation MC reçoit un ordre requérant la reconfiguration d'un modèle de diagnostic existant, stocké dans la mémoire M2, accompagné des informations représentatives de la (ou des) modification(s) signalée(s) par le système de gestion MS, il extrait de la mémoire M1 ce modèle de diagnostic existant. Puis, il le reconfigure en fonction des modifications du réseau N signalées. Le module d'adaptation MC stocke ensuite le modèle de diagnostic reconfiguré dans la mémoire M2.

Par exemple, lorsque le modèle de diagnostic est agencé sous la forme d'au moins un réseau Bayesien, sa reconfiguration peut consister à mettre à jour une ou plusieurs probabilité(s) (ou pondération(s)).

Lorsque le modèle de diagnostic diffère d'un réseau Bayesien, une reconfiguration peut par exemple consister à modifier un ou plusieurs coûts administratifs et/ou un ou plusieurs poids statistiques ou probabilistes.

Le dispositif de diagnostic DD selon l'invention, et notamment son module de traitement MT et son module de diagnostic MD, peuvent être réalisés sous la forme de circuits électroniques, de modules logiciels (ou informatiques), ou d'une combinaison de circuits et de logiciels.

L'invention ne se limite pas aux modes de réalisation de dispositif de diagnostic et de système de gestion (de réseau ou de service) décrits ci-avant, seulement à titre d'exemple, mais elle englobe toutes les variantes que pourra envisager l'homme de l'art dans le cadre des revendications ci-après.

## Revendications

1. Dispositif de diagnostic (DD) pour un réseau de communications (N) comportant des équipements de réseau (NE) couplés à un système de gestion (MS), ledit dispositif (DD) comportant des moyens de diagnostic (MD) propres à déterminer la cause de problème(s) survenant au sein dudit réseau (N) au moyen d'au moins un modèle de diagnostic, **caractérisé en ce qu'**il comprend en outre des moyens de traitement (MT) agencés pour adapter ledit modèle de diagnostic en fonction de données représentatives de modification(s) d'équipement de réseau (NE) fournies par ledit système de gestion (NMS)., et **en ce que** lesdits moyens de traitement (MT) comportent des moyens d'analyse (MA) agencés pour analyser lesdites données représentatives de modification(s) de manière à déterminer des actions à entreprendre pour adapter ledit modèle de diagnostic compte tenu de(s) modification(s) d'équipement de réseau (NE) qu'elles représentent, et pour générer des ordres représentatifs desdites actions, et des moyens d'adaptation (MC) agencés pour adapter un modèle de diagnostic en fonction d'ordre(s) reçu(s) desdits moyens d'analyse (MA).

2. Dispositif selon la revendication 1, **caractérisé en ce que** lesdits moyens de traitement (MT) comprennent une première mémoire (M1) couplée auxdits moyens d'analyse (MA) et propre à stocker au moins un modèle de diagnostic de référence, et **en ce que** lesdits moyens d'analyse (MA) sont agencés pour déterminer chaque action d'adaptation à entreprendre par confrontation des données reçues à au moins un modèle de diagnostic de référence stocké dans ladite première mémoire.

3. Dispositif selon l'une des revendications 1 et 2, **caractérisé en ce que** lesdits moyens d'analyse (MA) sont agencés pour déterminer des actions d'adaptation choisies dans un groupe comprenant au moins une action représentative d'un nouveau modèle à construire, une action représentative d'une modification à apporter à un modèle de diagnostic existant, et une action représentative d'une reconfiguration d'un modèle de diagnostic existant.

4. Dispositif selon l'une des revendications 1 à 3, **caractérisé en ce qu'**il comprend une seconde mémoire (M2) couplée auxdits moyens de traitement (MT) et auxdits moyens de diagnostic (MD) et propre à stocker chaque modèle de diagnostic transmis par lesdits moyens de traitement (MT).

5. Dispositif selon la combinaison des revendications 3 et 4, **caractérisé en ce que** lesdits moyens d'adaptation (MC) sont agencés, à réception d'un ordre requérant la génération d'un nouveau modèle de diagnostic en raison de modifications spécifiques d'équipements de réseau (NE), pour extraire de ladite première mémoire (M1) un modèle de diagnostic de référence adapté à la constitution dudit réseau (N) compte tenu desdites modifications spécifiques, de manière à générer un nouveau modèle de diagnostic, puis à le stocker dans ladite seconde mémoire (M2).

6. Dispositif selon la combinaison de la revendication 3 et de l'une des revendications 4 et 5, **caractérisé en ce que** lesdits moyens d'adaptation (MC) sont agencés, à réception d'un ordre requérant la modification d'un modèle de diagnostic existant, stocké dans ladite seconde mémoire (M2), en raison de modifications spécifiques d'équipements de réseau (NE), pour extraire de ladite seconde mémoire (M2) ledit modèle de diagnostic existant de manière à le modifier en fonction desdites modifications spécifiques, puis à le stocker une fois modifié dans ladite seconde mémoire (M2).

7. Dispositif selon la combinaison de la revendication 3 et de l'une des revendications 4 à 6, **caractérisé en ce que** lesdits moyens d'adaptation (MC) sont agencés, à réception d'un ordre requérant la reconfiguration d'un modèle de diagnostic existant, stocké dans ladite seconde mémoire (M2), en raison de modifications spécifiques d'équipements de réseau (NE), pour extraire de ladite seconde mémoire (M2) ledit modèle de diagnostic existant de manière à le reconfigurer en fonction desdites modifications spécifiques, puis à le stocker une fois reconfiguré dans ladite seconde mémoire (M2).

8. Dispositif selon l'une des revendications 4 à 7, **caractérisé en ce que** lesdits moyens de diagnostic (MD) sont agencés, en cas de réception d'une requête demandant un diagnostic choisi, pour extraire de ladite seconde mémoire (M2) ledit diagnostic choisi, puis pour exécuter le modèle de diagnostic extrait de manière à délivrer un diagnostic sur une sortie.

9. Dispositif selon l'une des revendications 1 à 8, **caractérisé en ce que** lesdites données sont transmises par ledit système de gestion (MS) sous forme de notifications.

10. Dispositif selon l'une des revendications 2 à 9, **caractérisé en ce que** certains au moins desdits modèles de diagnostic de référence sont agencés sous la forme d'au moins un réseau bayesien.

11. Dispositif selon l'une des revendications 1 à 10, **caractérisé en ce que** certains au moins desdits modèles de diagnostic sont agencés sous la forme d'au moins un réseau bayesien.

12. Système de gestion (MS) pour un réseau de communications géré, **caractérisé en ce qu'**il comprend au moins un dispositif de diagnostic (DD) selon l'une des revendications précédentes.

13. Système de gestion selon la revendication 12, **caractérisé en ce qu'**il constitue un système de gestion de réseau.

14. Système de gestion selon la revendication 12, **caractérisé en ce qu'**il constitue un système de gestion de service.

## Claims

1. A diagnostic device (DD) for a communications network (N) comprising network equipment (NE) coupled with a management system (MS), said device (DD) comprising diagnostic means (MD) capable of determining the cause of problem(s) that occur within said network (N) by means of at least one diagnostic model, **characterized in that** it further comprises processing means (MT) operative to adapt said diagnostic model based on data representative of change(s) to network equipment (NE) provided by said management system (NMS), and **in that** said processing means (MT) comprise analysis means (MA) operative to analyze said data representative of change(s) so as to determine actions to be taken to adapt said diagnostic model, taking into account the change(s) to network equipment (NE) that they represent, and to generate orders representative of said actions, and adaptation means (MC) operative to adapt a diagnostic model based on order(s) received from said analysis means (MA).

2. A device according to claim 1, **characterized in that** said processing means (MT) comprise a first memory (M1) coupled to said analysis means (MA) and capable of storing at least one reference diagnostic model, and **in that** said analysis means (MA) are operative to determine each adaptation action to take by reconciling the received data with at least one reference diagnostic model stored within said first memory.

3. A device according to one of the claims 1 and 2, **characterized in that** said analysis means (MA) are operative to determine adaptation actions chosen from a group comprising at least one action representative of a new model to be built, one action representative of a change to be made to an existing diagnostic model, and one action representative of a reconfiguration of an existing diagnostic model.

4. A device according to one of the claims 1 to 3, **characterized in that** it comprises a second memory (M2) coupled to said processing means (MT) and to said diagnostic means (MD) and capable of storing each diagnostic model transmitted by said processing means (MT).

5. A device according to the combination of claims 3 and 4, **characterized in that** said adaptation means (MC) are operative, upon receiving an order requesting the generating of a new diagnostic model due to specific changes to network equipment (NE), to extract from said first memory (M1) a diagnostic reference model adapted to the constitution of said network (N) taking into account said specific changes, so as to generate a new diagnostic model, then to store it within said second memory (M2).

6. A device according to the combination of claim 3 and one of the claims 4 and 5, **characterized in that** said adaptation means (MC) are operative, upon receiving an order requesting the changing of an existing diagnostic model, stored in said second memory (M2), owing to specific changes to network equipment (NE), to extract from said second memory (M2) said existing diagnostic model so as to change it based on said specific changes, then once changed to store it within said second memory (M2).

7. A device according to the combination of claim 3 and one of the claims 4 to 6, **characterized in that** said adaptation means (MC) are operative, upon receiving an order requesting the reconfiguring of an existing diagnostic model, stored in said second memory (M2), owing to specific changes to network equipment (NE), to extract from said second memory (M2) said existing diagnostic model so as to reconfigure it based on said specific changes, then once changed to store it within said second memory (M2).

8. A device according to one of the claims 4 to 7, **characterized in that** said diagnostic means (MD) are operative, in the event that a request for a chosen diagnostic is received, to extract from said second memory (M2) said chosen diagnostic, then to run the extracted diagnostic model so as to deliver a diagnostic at the output.

9. A device according to one of the claims 1 to 8, **characterized in that** said data is transmitted by said management system (MS) in the form of notifications.

10. A device according to one of the claims 2 to 9, **characterized in that** at least some of said reference diagnostic models are arranged in the form of at least one Bayesian network.

11. A device according to one of the claims 1 to 10, **characterized in that** at least some of said diagnostic models are arranged in the form of at least one Bayesian network.

12. A management system (MS) for a managed communications network in that it comprises at least one diagnostic device (DD) according to one of the preceding claims.

13. A management system according to claim 12, **characterized in that** it constitutes a network management system.

14. A management system according to claim 12, **characterized in that** it constitutes a service management system.

## Patentansprüche

1. Diagnosevorrichtung (DD) für ein Kommunikationsnetzwerk (N) mit Netzwerkelementen (NE), die an ein Verwaltungssystem (MS) gekoppelt sind, wobei die besagte Vorrichtung (DD) Diagnosemittel (MD) umfasst, die dazu ausgelegt sind, die Ursache eines oder mehrerer innerhalb des besagten Netzwerks (N) auftretenden Probleme anhand mindestens eines Diagnosemodells zu ermitteln, **dadurch gekennzeichnet, dass** sie weiterhin Verarbeitungsmittel (MT) umfasst, die dazu ausgelegt sind, das besagte Diagnosemodell in Abhängigkeit von Daten, die für eine oder mehrere von dem besagten Verwaltungssystem (NMS) bereitgestellte Modifikationen der Netzwerkvorrichtung (NE) repräsentativ sind, anzupassen, und dass die besagten Verarbeitungsmittel (MT) Analysemittel (MA), die für die Analyse der besagten für eine oder mehrere Modifikationen repräsentativen Daten ausgelegt sind, umfassen, um die zu treffenden Maßnahmen für die Anpassung des besagten Diagnosemodells unter Berücksichtigung der einen oder mehreren Modifikationen der Netzwerkvorrichtung (NE), die sie darstellen, zu bestimmen und für die besagten Maßnahmen repräsentative Befehle zu erzeugen, sowie Anpassungsmittel (MC), die für die Anpassung eines Diagnosemodells in Abhängigkeit von einem oder mehreren von den besagten Analysemitteln (MA) empfangenen Befehlen ausgelegt sind, aufweisen.

2. Vorrichtung nach Anspruch 1, **dadurch gekennzeichnet, dass** die besagten Verarbeitungsmittel (MT) einen ersten Speicher (M1) umfasst, der an die besagten Analysemittel (MA) gekoppelt und für die Speicherung mindestens eines Diagnose-Referenzmodells bestimmt ist, und dass die besagten Analysemittel (MA) dazu ausgelegt sind, jede zu treffende Anpassungsmaßnahme durch Konfrontation der empfangenen Daten mit mindestens einem in dem besagten ersten Speicher gespeicherten Diagnose-Referenzmodell zu bestimmen.

3. Vorrichtung nach einem der Ansprüche 1 und 2, **dadurch gekennzeichnet, dass** die besagten Analysemittel (MA) für die Bestimmung der in einer Gruppe zumindest bestehend aus einer Maßnahme, die für ein zu erstellendes neues Modell repräsentativ ist, einer Maßnahme, die für eine an einem bestehenden Diagnosemodell vorzunehmende Modifikation repräsentativ ist, und einer Maßnahme, die für eine Rekonfiguration eines bestehenden Diagnosemodells repräsentativ ist, gewählten Anpassungsmaßnahmen ausgelegt sind.

4. Vorrichtung nach einem der Ansprüche 1 bis 3, **dadurch gekennzeichnet, dass** sie einen zweiten Speicher (M2) umfasst, der an die besagten Verarbeitungsmittel (MT) und an die besagten Diagnosemittel (MD) gekoppelt und für die Speicherung eines jeden von den besagten Verarbeitungsmitteln (MT) übertragenen Diagnosemodells bestimmt ist.

5. Vorrichtung gemäß der Kombination der Ansprüche 3 und 4, **dadurch gekennzeichnet, dass** die besagten Anpassungsmittel (MC) dazu ausgelegt sind, nach Empfang eines Befehls, welcher die Erzeugung eines neuen Diagnosemodells aufgrund von spezifischen Modifikationen von Netzwerkvorrichtungen (NE) anfordert, ein Diagnose-Referenzmodell, welches für den Aufbau des besagten Netzwerks (N) angesichts der besagten spezifischen Modifikationen geeignet ist, aus dem besagten ersten Speicher (M1) zu extrahieren, um ein neues Diagnosemodell zu erzeugen und dieses anschließend in dem besagten zweiten Speicher (M2) zu speichern.

6. Vorrichtung gemäß der Kombination des Anspruchs 3 und eines der Ansprüche 4 und 5, **dadurch gekennzeichnet, dass** die besagten Anpassungsmittel (MC) dazu ausgelegt sind, nach Empfang eines Befehls, der die Modifikation eines bestehenden Diagnosemodells, welches in dem besagten zweiten Speicher (M2) gespeichert ist, aufgrund von spezifischen Modifikationen von Netzwerkvorrichtungen (NE) anfordert, das besagte bestehende Diagnosemodell aus dem besagten zweiten Speicher (M2) zu extrahieren, um es gemäß den besagten spezifischen Modifikationen zu modifizieren und nach der Modifikation in dem besagten zweiten Speicher (M2) zu speichern.

7. Vorrichtung gemäß der Kombination des Anspruchs 3 und eines der Ansprüche 4 bis 6, **dadurch gekennzeichnet, dass** die besagten Anpassungsmittel (MC) dazu ausgelegt sind, nach Empfang eines Befehls, welcher die Rekonfiguration eines bestehenden, in dem besagten zweiten Speicher (M2) gespeicherten Diagnosemodells aufgrund von spezifischen Modifikationen von Netzwerkvorrichtungen (NE) anfordert, das besagte bestehende Diagnosemodell aus dem besagten zweiten Speicher (M2) zu extrahieren, um es gemäß den besagten spezifischen Modifikationen zu rekonfigurieren und nach der Rekonfiguration in dem besagten zweiten Speicher (M2) zu speichern.

8. Vorrichtung nach einem der Ansprüche 4 bis 7, **dadurch gekennzeichnet, dass** die besagten Diagnosemittel (MD) dazu ausgelegt sind, im Fall des Empfangs einer Anfrage, welche eine ausgewählte Diagnose anfordert, die besagte ausgewählte Diagnose aus dem besagten zweiten Speicher (M2) zu extrahieren und anschließend das extrahierte Diagnosemodell auszuführen, um eine Diagnose auf einem Ausgang bereitzustellen.

9. Vorrichtung nach einem der Ansprüche 1 bis 8, **dadurch gekennzeichnet, dass** die besagten Daten in der Form von Mitteilungen von dem besagten Verwaltungssystem (MS) übertragen werden.

10. Vorrichtung nach einem der Ansprüche 2 bis 9, **dadurch gekennzeichnet, dass** zumindest bestimmte der besagten Diagnose-Referenzmodelle in der Form mindestens eines Bayes'schen Netzwerks ausgelegt sind.

11. Vorrichtung nach einem der Ansprüche 1 bis 10, **dadurch gekennzeichnet, dass** zumindest bestimmte der besagten Diagnosemodelle in der Form mindestens eines Bayes'schen Netzwerks ausgelegt sind.

12. Verwaltungssystem (MS) für ein verwaltetes Kommunikationsnetzwerk, **dadurch gekennzeichnet, dass** es mindestens eine Diagnosevorrichtung (DD) gemäß einem der vorstehenden Ansprüche umfasst.

13. Verwaltungssystem nach Anspruch 12, **dadurch gekennzeichnet, dass** es ein Netzwerkverwaltungssystem darstellt.

14. Verwaltungssystem nach Anspruch 12, **dadurch gekennzeichnet, dass** es ein Dienstverwaltungssystem darstellt.
